(19) Europäisches Patentamt
European Patent Office
Office européen des brevets

(11) **EP 3 255 316 B1**

(12) **EUROPEAN PATENT SPECIFICATION**

(45) Date of publication and mention
of the grant of the patent:
**31.03.2021 Bulletin 2021/13**

(51) Int Cl.:
**F16H 61/02** (2006.01)      **B60W 30/14** (2006.01)
**B60W 30/18** (2012.01)

(21) Application number: **17168580.3**

(22) Date of filing: **26.06.2013**

(54) **TRANSMISSION CONTROL SYSTEM**

ÜBERTRAGUNGSSTEUERUNGSSYSTEM

SYSTÈME DE COMMANDE DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2012 SE 1200388**

(43) Date of publication of application:
**13.12.2017 Bulletin 2017/50**

(62) Document number(s) of the earlier application(s) in
accordance with Art. 76 EPC:
**13748377.2 / 2 867 561**

(73) Proprietor: **Scania CV AB
151 87 Södertälje (SE)**

(72) Inventors:
• **ROOS, Fredrik
141 71 Segeltorp (SE)**
• **LINDSTRÖM, Oskar
178 36 Ekerö (SE)**
• **ÖGREN, Mikael
145 64 Norsborg (SE)**

(74) Representative: **Scania CV AB
Patents, GP 117kv
151 87 Södertälje (SE)**

(56) References cited:
WO-A1-2011/075065      DE-A1-102008 023 135
DE-A1-102010 030 346      DE-A1-102011 109 039

## Description

### Technical field

The present invention relates to a method for choosing a transmission mode as described in the preamble to patent claim 1.

The present invention also relates to a computer program and a computer program product which implement the method according to the invention.

### Background

For motor vehicles, such as, for example, cars, trucks and buses, a fuel cost represents a significant expense for the owner or user of the vehicle. For a hauling company, for example, apart from the cost of procurement of the vehicle, the main items of expenditure for the running of a vehicle are constituted by pay to the driver of the vehicle, costs of repairs and maintenance, and fuel for propulsion of the vehicle. The fuel cost can here have a very large impact on profitability for the hauling company. To this end, a number of different systems have been developed in order to reduce fuel consumption, such as, for example, fuel-efficient engines and fuel-saving cruise control devices.

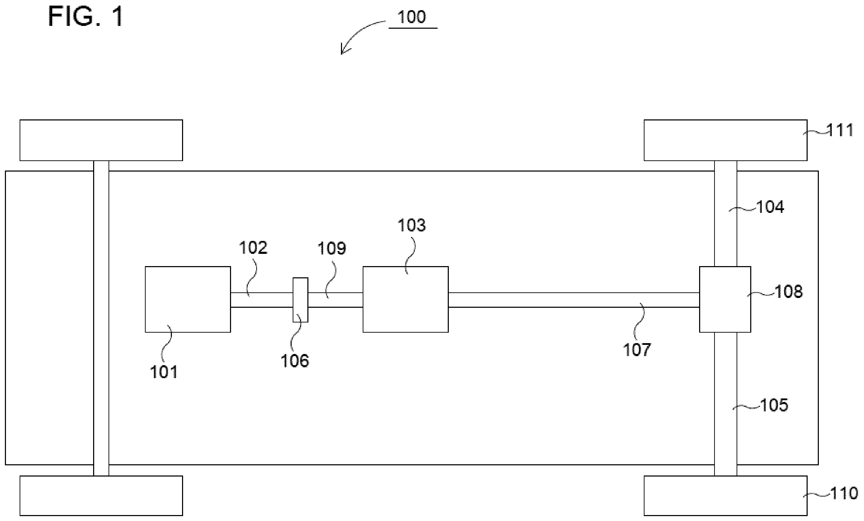

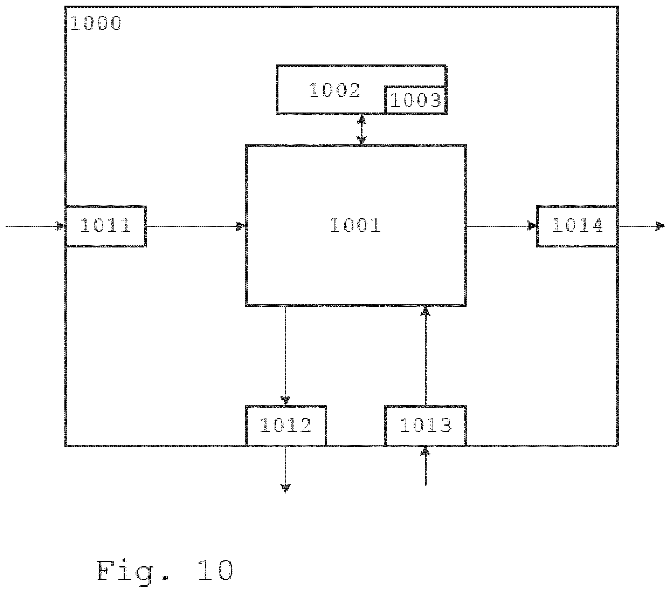

Fig. 1 shows in schematic representation a drive train in a vehicle 100. The drive train comprises an internal combustion engine 101, which is connected in a conventional manner, via an output shaft 102 from the internal combustion engine 101, usually via a flywheel, to an input shaft 109 of a gearbox 103 by means of a clutch 106. The clutch 106 can be constituted, for example, by an automatically controlled clutch, and is controlled by the control system of the vehicle via a control unit 1000 (figure 10). The control unit 1000 can also control the gearbox 103.

The gearbox 103 is here illustrated schematically as a unit. The gearbox 103 can also, however, physically consist of a plurality of interacting gearboxes, for example of a range gearbox, a main gearbox and a split gearbox, which are arranged along the drive train of the vehicle. The gearbox can comprise a suitable number of gear positions. In contemporary gearboxes for heavy duty vehicles are usually found twelve forward gears, two reverse gears and a neutral gear position. If the gearbox 103 physically consists of a plurality of part gearboxes according to the above, these twelve forward gears are distributed amongst two gears in the range gearbox, three gears in the main gearbox and two gears in the split gearbox, which together constitute twelve gear positions (2x3x2=12). The vehicle 100 further comprises drive shafts 104, 105, which are connected to the drive wheels 110, 111 of the vehicle and which are driven by an output shaft 107 from the gearbox 103 via an axle gearing 108, such as, for example, a conventional differential.

The vehicle 100 further comprises a variety of different braking systems, such as a conventional service braking system, which can comprise, for example, brake disks with associated brake linings (not shown) arranged next to each wheel. The engine 101 can be controlled on the basis of instructions from a cruise control device, in order to maintain a constant actual vehicle speed and/or vary the actual vehicle speed so that a fuel consumption which is optimized within reasonable speed limits is obtained. The engine 101 can also be controlled by a driver of the vehicle.

DE102010030346 discloses a method and a system for controlling coasting in a vehicle. If coasting is deemed suitable for a predetermined number of consecutive points ahead of the vehicle, it is activated.

### Brief description of the invention

In descents, for example, or in situations in which the vehicle must reduce its actual speed, fuel savings have historically been made by a reduced request for positive engine torque, alternatively with the aid of dragging. The reduced request for positive engine torque means that the driving force in the direction of travel, which the internal combustion engine delivers via the drive wheels, is reduced, for example by reduced fuel injection in the engine 101, thereby reducing the fuel consumption.

Dragging means driving the vehicle with closed drive train, that is to say with the combustion engine 101 connected to the drive wheels 110, 111 of the vehicle, at the same time as the fuel supply to the internal combustion engine 101 is shut off. One advantage with this type of measure is that, since fuel supply to the internal combustion engine is shut off, the consumption of the internal combustion engine is also equal to zero. The measure also means, however, that the internal combustion engine 101 will be driven by the drive wheels of the vehicle via the drive train, so that so-called "dragging" is achieved, wherein the internal losses of the internal combustion engine give rise to a braking action, that is to say that the vehicle is engine-braked.

Although a reduction in requested engine torque and dragging lowers the fuel consumption, this lowering is not always optimized, firstly since the reduced engine torque, despite everything, generally consumes more fuel than is necessary and secondly since the dragging, moreover, provides an engine braking of the vehicle which is not economical on fuel.

One object of the present invention is to further reduce the fuel consumption of the vehicle.

This object is achieved by the above-stated method according to the characterizing part of patent claim 1. The object is also achieved by the above-stated computer program and computer program product.

Through the use of the present invention, the object, that is to say of reducing the fuel consumption, is achieved by providing a gear selection which produces as low a revolution speed and as good a fuel economy as possible. When the invention is utilized, coasting can be regarded as part of the gear selection in the vehicle. This provides further scope for achieving a lowering of the revolution speed, which is exploited according to the invention.

Through the use of the present invention, a very exact and well informed choice of transmission mode for use over the course of a road section ahead of the vehicle, where transmission mode comprises coasting as well as gear positions in the gearbox, is obtained. The object of this choice of transmission mode is to bring down the engine speed as far as possible and thus save fuel. One or more simulations of future speed profiles $v_{sim}$ for an actual speed for the vehicle are conducted, which results in the system having very good control over how the vehicle will perform over the course of the road section ahead of the vehicle. Choices regarding coasting and/or gear position can be made, which choices will intuitively feel right for a driver of the vehicle. The extent of use of the function will hereby increase further, whereby fuel-saving coasting and/or upshifts will lower the total fuel consumption.

The present invention can be implemented without much adding to the complexity in the vehicle, since the invention can make use of data which are already available in other systems in the vehicle, such as road slope information to which cruise control devices in the vehicle have access.

According to one embodiment of the present invention, the transmission in the vehicle is controlled such that the speed of the engine is lowered at a moment when this is suitable. The suitability of a transmission mode essentially consists in how long the system considers it possible to utilize the transmission mode without losing too much speed. In the coasting case, suitability is also based on an assessment of whether the vehicle will need to be braked or not over the course of the road section.

According to one embodiment of the present invention, a lower transmission mode is chosen if a downshift or a suspension of coasting is considered necessary. The highest applicable transmission mode which is chosen according to the invention can thus constitute a transmission mode which is lower than a transmission mode which is utilized when the simulation is made.

The present invention can be utilized both in pedal driving, that is to say that the driver himself regulates the requesting of torque from the engine, and in cruise control driving. The term pedal driving here and in this document comprises utilization of essentially all types of control system which are suited to regulating the torque demand, such as, for example, a gas pedal or a manual throttle device.

**Brief list of figures**

The invention will be illustrated in greater detail below on the basis of the appended drawings, in which identical reference symbols are used for identical parts, and wherein:

figure 1 shows in schematic representation parts of an exemplary vehicle,

figure 2 shows in schematic representation a driving situation,

figure 3 shows a graph representing engine friction as a function of engine speed,

figure 4 shows an example of a simulation according to the invention,

figure 5 shows a flowchart for the method according to the invention,

figure 6 shows an example of a simulation according to the invention,

figure 7 shows an example of a simulation according to the invention,

figure 8 shows an example of a simulation according to the invention,

figure 9 shows an example of a simulation according to the invention, and

figure 10 shows a control unit according to the invention.

**Description of preferred embodiments**

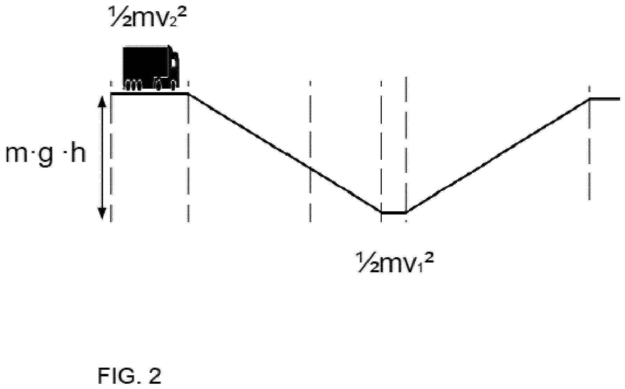

Figure 2 shows in schematic representation an example of a driving situation, a descent, where the present invention can be applied. The invention can also be applied in other driving situations, for example in the event of a reduction in speed, which can occur on a flat road. For pedagogical reasons, however, the driving situation in figure 2 will here be used to describe principles which are utilized by the invention.

For the vehicle in figure 2, an energy relationship can be established for the driving situation:

$$mgh = (\tfrac{1}{2}\mathrm{m}v_2{}^2 - \tfrac{1}{2}\mathrm{m}v_1{}^2) + (F_{air} + F_{rr} + F_{eng} + F_{gb} + F_{axle/nav}) \bullet s \quad \text{(equation 1)}$$

in which:

- $mgh$ is the potential energy of the vehicle;

- $\tfrac{1}{2}\mathrm{m}v_2{}^2$ is the kinetic energy of the vehicle up on the top of the hill;

- $\tfrac{1}{2}\mathrm{m}v_1{}^2$ is the kinetic energy of the vehicle at the bottom of the hill;

- $F_{air}$ is the air resistance of the vehicle;

- $F_{rr}$ is the rolling resistance of the vehicle;

- $F_{eng}$ is the engine friction;

- $F_{gb}$ is the gearbox friction;

- $F_{axle/nav}$ is friction in rear axle, seals and wheel bearings; and

- $s$ is the traveled distance between the top and the bottom of the hill.

As can be seen from equation 1, a number of forces $F_{air}$, $F_{rr}$, $F_{eng}$, $F_{gb}$, and $F_{axle/nav}$ act against the motion of the vehicle.

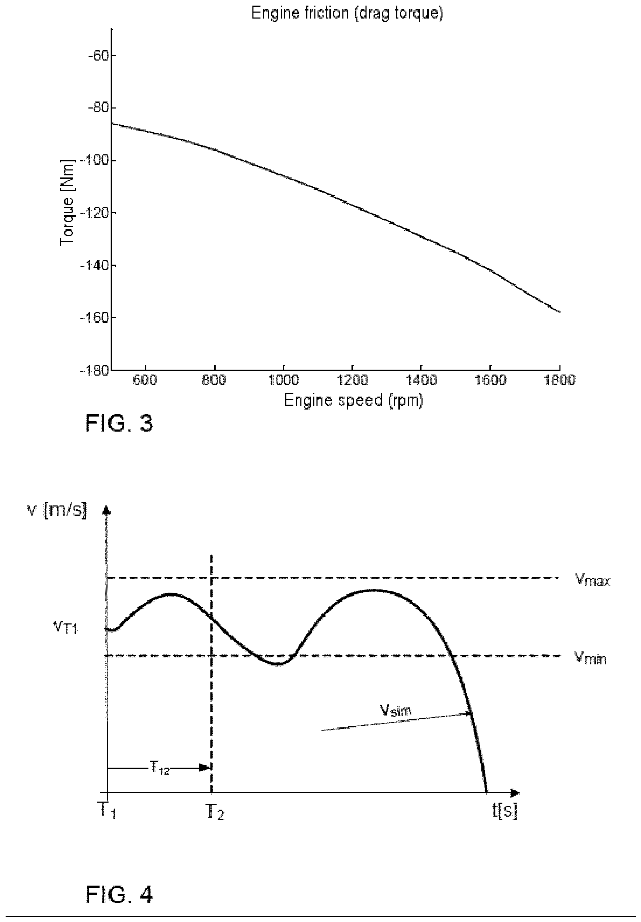

Figure 3 shows an example of engine friction for a truck engine. It can here be seen that the negative torque corresponding to the engine friction $F_{eng}$, which inhibits the motion of the vehicle, increases with increased rotation speed of the engine 101 (note that the y-axis has negative gradation in figure 3). Conversely, reduced rotation speed of the engine gives reduced force for the engine friction $F_{eng}$, that is to say reduced negative torque, which is exploited by the present invention.

According to one embodiment of the present invention, an upshift or coasting is applied by virtue of the fact that the highest applicable transmission mode is chosen if this gives a fuel saving essentially without adversely affecting the driving of the vehicle. In situations, too, where a downshift or a suspension of coasting is deemed necessary, according to one embodiment the transmission mode which is to be utilized after this downshift or this suspension can be chosen by selection of the highest applicable transmission mode. An applicable/appropriate transmission mode is in this document a transmission mode which is usable, while the chosen highest applicable transmission mode constitutes a recommended transmission mode.

In this document, an upshift means that a higher possible gear position in the gearbox 103, in which this higher gear position is physical, that is to say constitutes one of the gears established by the gearbox, is chosen. This higher gear position also means that the engine 101 operates at a lower engine speed.

Coasting means in this document that the engine 101 of the vehicle is disengaged from the drive wheels 110, 111 of the vehicle, i.e. that the drive train is opened. This disengagement of the drive wheels 110, 111 from the engine 101, also referred to as opening of the drive train, can be achieved, for example, by setting the gearbox 103 in a neutral position or by opening the clutch 106. In other words, essentially no force is transmitted from the engine 101 to the drive wheels 110, 111 during the coasting. Disengagement of the engine 101 from the drive wheels 110, 111 of the vehicle 100 when the vehicle 100 is in motion is thus referred to in this document as coasting, and can also be seen as a highest fictitious/imaginary gear position for the drive train. An opening of the clutch and/or the neutral position for the gearbox can thus be seen as a highest fictitious/imaginary gear position for the drive train.

If a coasting through opening of the clutch and/or through engagement of a neutral gear position is considered applicable, the drive train thus has a number of physical gear positions, for example twelve gear positions, implemented in the gearbox 103, as well as at least one extra fictitious gear position, which is higher than the physical gear positions in the gearbox and comprises opening of the clutch and/or engagement of neutral gear position in the gearbox 103.

An upshift according to the present invention causes a reduction in the forces acting against the motion of the vehicle, since the force for the engine friction $F_{eng}$ diminishes with diminishing engine speed, as is also shown in figure 3. An upshift can thus lower the fuel consumption by virtue of reduced resistance against the vehicle.

Coasting according to the present invention causes a considerable reduction in the forces acting against the motion of the vehicle, since the force for the engine friction $F_{eng}$ then diminishes to a value essentially equal to zero (0). To this end, coasting can considerably lower the fuel consumption by virtue of this reduced resistance against the vehicle. In certain cases of coasting, idling fuel would have to be supplied to the engine, however, to prevent this from stalling, while in other cases the engine can be allowed to stall.

The result is that, from a fuel aspect, it is often more advantageous to drive the vehicle with open drive train, that is to say in coasting mode, than with dragging, that is to say when the drive train is closed at the same time as the fuel supply to the engine 101 is shut off. The reason for this is that the limited quantity of fuel which is required to keep the internal combustion engine running when the internal combustion engine is disengaged is counterbalanced by the fact that the vehicle can continue with disengaged internal combustion engine for a longer distance, for example after a downslope has been negotiated. This is due, inter alia, to the fact that the vehicle will reach a higher speed on, for example, the downslope when driven with disengaged internal combustion engine compared with when the vehicle is driven with closed drive train without fuel supply.

In coasting, moreover, the force which inhibits the driving of the vehicle will be lower when the internal combustion engine of the vehicle is disengaged from the drive shaft, since there is no engine brake force inhibiting the progress of the vehicle. This makes the vehicle decelerate more slowly, for example, when the vehicle reaches the end of the downslope, which in turn means that coasting can often be utilized for a relatively long distance after, for example, an end of a descent. A considerable reduction in fuel consumption is hereby obtained.

According to one embodiment of the present invention, it is determined when, that is to say at what moment, an upshift or a coasting is possible and what effect this upshift or coasting would have on the actual speed profile of the vehicle for a road section.

In order to be able to decide this, one or more future speed profiles $V_{sim}$ for the actual speed of the vehicle for a road section ahead of the vehicle are simulated. Thus the simulation is conducted such that it is based on the current position and situation of the vehicle and looks forward over the road section, wherein the simulation is made on the basis of a road slope for the road section and a transmission mode for the vehicle.

For example, the simulation can be conducted in the vehicle at a predetermined frequency, such as for example at the frequency of 1 Hz, which means that a new simulation result is ready every second. The road section for which the simulation is conducted comprises a predetermined section ahead of the vehicle, in which this, for example, can be 1 km long. The road section can also be seen as a horizon ahead of the vehicle, for which the simulation is to be conducted.

Apart from the above-stated parameters of road slope and transmission mode, the simulation can also be based on one or more of a driving method, a current actual vehicle speed, at least one engine characteristic, such as maximum and/or minimum engine torque, a vehicle weight, an air resistance, a rolling resistance, a gear ratio in the gearbox and/or the drive train, a wheel radius.

The road slope on which the simulations are based can be obtained in a number of different ways. The road slope can be determined on the basis of map data, for example from digital maps comprising topographical information, in combination with positioning information, such as, for example GPS information (Global Positioning System). With the aid of the positioning information, the position of the vehicle in relation to the map data can be established, so that the road slope can be extracted from the map data.

In many present-day cruise control systems, map data and positioning information are utilized in the cruise control. Such systems can then provide map data and positioning information to the system for the present invention, the effect of which is that the added complexity for the determination of the road slope is minimized.

The road slope on which the simulations are based can be obtained by estimating the road slope encountered by the vehicle in the simulation instance. There are many ways of estimating this road slope, for example on the basis of an engine torque in the vehicle, of an acceleration for the vehicle, on an accelerometer, on GPS information, on radar information, on camera information, on information from another vehicle, on positioning information and road slope information stored earlier in the vehicle, or on information obtained from a traffic system related to said road section. In systems in which information exchange between vehicles is utilized, road slope estimated by one vehicle can also be made available to other vehicles, either directly, or via an intermediate unit such as a database or the like.

The simulations are conducted on the basis of an assumption of a transmission mode. As will be described in greater detail below, a transmission mode can comprise, for example, coasting or a gear position for the gearbox 103 in the vehicle, in which the coasting can be achieved, for example, by opening of the clutch 106 or by engagement of a neutral gear. Thus, a future speed profile $V_{sim}$ for the actual speed of the vehicle is simulated, for example, for a specific gear in the gearbox, for an open clutch, or for a neutral gear in the gearbox. More simulations can be conducted in parallel or sequentially, so that simulations for all relevant transmission modes are made before the simulations are evaluated and decisions taken as to which transmission mode shall be used.

For each gear in the gearbox 103 there are parameters related to this gear, such as gear ratio, efficiency and maximally permitted torque. One or more parameters can constitute input data for simulation of the future speed profile $V_{sim}$ for this gear.

Thus, at one moment, one or more future speed profiles $V_{sim}$ for one or more gears in the gearbox, for an open clutch, and/or for neutral gear in the gearbox can be simulated, for example. These one or more future speed profiles $V_{sim}$ will subsequently be evaluated when decisions are to be taken as to which transmission mode shall be used, as will be described in greater detail below.

According to the present invention, the one or more future speed profiles $V_{sim}$ are compared with a lowest permitted speed $v_{min}$, which an actual speed for the vehicle in a transmission mode should not fall below over the course of the road section. The lowest permitted speed $v_{min}$ is thus different for different transmission modes. The comparison is illustrated in schematic representation in figure 4. If a simulated future speed profile $V_{sim}$ related to a certain transmission mode is greater than the lowest permitted speed $v_{min}$ throughout the first time period $T_{12}$, then this transmission mode is deemed applicable. That a transmission mode is applicable signifies in this document that the transmission mode is considered usable and that this transmission mode shall form one of the transmission modes from which the transmission mode to be subsequently used will be chosen. The first time period $T_{12}$ extends from a first moment $T_1$, which for the algorithm often constitutes a current moment and at which at least one simulation is conducted, to a second, later moment $T_2$. The first time period $T_{12}$ can be different for different gears/transmission modes and can be dynamic and dependent on the vehicle specification.

The second moment $T_2$ is chosen such that the first time period $T_{12}$ corresponds to a smallest/shortest permitted time period for which a gear should be utilized in order to avoid inconsistent gearshift. Inconsistent gearshift here comprises shifts between different gears/transmission modes at relatively high frequency. Thus the first time period $T_{12}$ has a length which ensures that the driver is not subjected to unnecessarily frequent and irritating gearshift. The eagerness for drivers to utilize the system according to the invention hereby increases, since it only deems gears to be applicable if they are suitable throughout the first time period $T_{12}$, that is to say that they can only be deemed applicable if they can be utilized throughout the first time period $T_{12}$, whereby jerky gearshift is avoided.

In the non-limiting example in figure 4 is shown an illustration of a simulated future speed profile $V_{sim}$ which is greater than the lowest permitted speed $v_{min}$ throughout the first time period $T_{12}$, with the result that the transmission mode on which this simulated future speed profile $V_{sim}$ is based will be deemed to be applicable. If, for example, this simulated future speed profile $V_{sim}$ is here based on the transmission mode for the utilization of a twelfth gear in the gearbox 103 then the twelfth gear will thus be deemed to be applicable if the simulated future speed profile $V_{sim}$ has this appearance. Correspondingly, a simulated future speed profile $V_{sim}$ which is based on the transmission mode for opening of the clutch and has this appearance would result in coasting by virtue of an opened clutch being deemed to be applicable, and a simulated future speed profile $V_{sim}$ which is based on the transmission mode for neutral gear and has this appearance would result in coasting with neutral gear being deemed to be applicable.

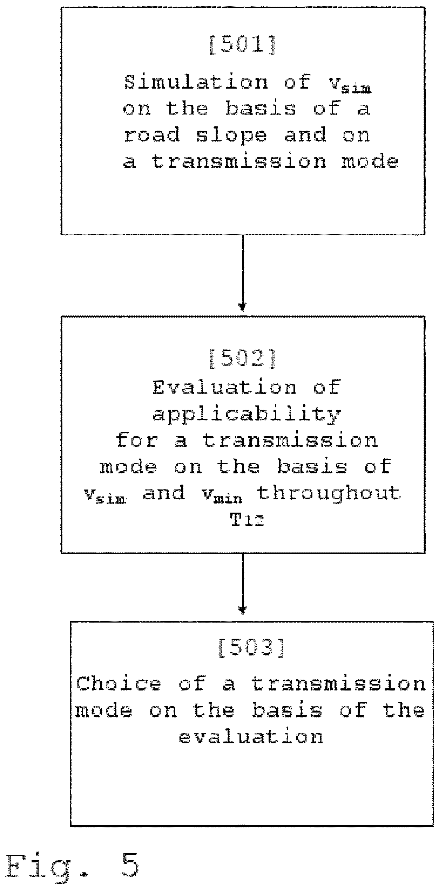

Figure 5 shows a flowchart for the method according to the present invention. In a first step 501 of the method, one or more simulations of future speed profiles $V_{sim}$ are conducted for the road section ahead of the vehicle 100, in which the simulation for each of the at least one future speed profile $V_{sim}$ is based on a road slope and on a transmission mode for the vehicle. As has been described above, one or more simulations for gears in the gearbox 103, for open clutch 106, and/or for neutral gear position in the gearbox 103 can thus here be conducted. According to one embodiment, account is also taken in the simulations of an adopted driving method, in which this driving method can comprise one or more of cruise control driving, driving with drag torque, driving according to an arbitrary torque profile, and gas pedal driving. The simulation can also take account of one or more vehicle parameters, such as, for example, the weight of the vehicle.

In a second step 502 of the method, the applicability of the transmission modes which are related to the at least one simulated future speed profile $V_{sim}$ is evaluated. A transmission mode is here deemed applicable if its related simulated future speed profile $V_{sim}$ is greater than the above described lowest permitted speed $v_{min}$ throughout the first time period $T_{12}$, which extends from the first moment $T_1$, when the simulations are conducted, to the second, later moment $T_2$. The second moment $T_2$ here constitutes a moment such that the first time period $T_{12}$ corresponds to a smallest permitted time period for which a transmission mode should be utilized after the simulation in order that inconsistent gearshift shall be avoided.

In a third step 503 of the method, a transmission mode is then chosen on the basis of the evaluation in the second method step 502. Typically, a transmission mode which has been deemed applicable in the second method step 502 is chosen here. According to one embodiment of the invention, which is described in greater detail below, a transmission mode for coasting, if some such has been deemed to be applicable, is chosen here. Otherwise, a transmission mode for the highest gear position which has been deemed to be applicable is chosen. The choice of the transmission mode to be utilized in the vehicle is made, according to one embodiment, by the control system itself. According to another embodiment, the control system presents the suitable transmission mode to the driver with the aid of a display unit, whereafter the driver has an opportunity to choose whether the presented transmission mode shall be utilized or not.

By, according to the present invention, basing the choice of transmission mode to be utilized in the vehicle 100 on one or more simulations of future speed profiles $v_{sim}$, a factually informed choice of transmission mode can be made. Through the use of the invention, it is also possible to ensure that repeated upshifts and/or downshifts are not made, since the simulations are made over a longer time period. Previously known solutions have been based on the situation at the precise point when decisions have been taken, which has often led to upshifts and/or downshifts having been made in different sequences. Such sequences of upshifts and/or downshifts are perceived as very disturbing by a driver of the vehicle. The present invention thus provides a transmission mode control system which is perceived as continuous and intuitively comprehensible for the driver. Hence the use of the function will increase and thereby reduces a total fuel consumption for the vehicle.

As has been stated above, many different transmission modes are obtainable. According to one embodiment of the invention, a gear position for a gearbox 103 is incorporated in a transmission mode. The evaluation of the transmission mode here therefore comprises an evaluation of whether an upshift to a possibly higher gear position is applicable. A possibly higher gear position can here constitute essentially any gear whatsoever in the gearbox 103 apart from its lowest gear, in which this gear is usable at the actual speed of the vehicle and/or at an actual requested engine torque. However, the invention is especially applicable for the higher gears in the gearbox 103, and especially its highest gear, for example a twelfth gear if the gearbox 103 has a total of twelve gears for the forward drive of the vehicle 100. Here at least one simulation of a future speed profile $V_{sim}$ for at least one gear in the gearbox 103 is thus conducted, which simulation is then evaluated in order to decide whether each of these future speed profiles $V_{sim}$ are applicable or not. According to one embodiment, of the gears which have been deemed to be applicable, that which has the lowest engine speed is then chosen. In other words, the transmission mode is chosen for the highest gear which has been deemed to be applicable in the evaluation.

According to one embodiment of the invention, coasting is incorporated in one or more transmission modes. The evaluation therefore here comprises an evaluation of whether coasting is applicable or not, in which the engine of the vehicle is assumed to be idling during the coasting. For coasting, the one or more simulated future speed profiles $v_{sim}$, apart from being compared with the lowest permitted speed $v_{min}$, shall also be compared with a highest permitted speed $v_{max}$, which an actual speed for a vehicle 100 should not exceed. By comparing the simulated future speed profiles $V_{sim}$ with the highest permitted speed $v_{max}$, transmission modes in which the future speed profiles $v_{sim}$ exceed the highest permitted speed $v_{max}$ can be dropped, whereby the risk of the vehicle, in a descent, for example, coasting into such a high speed that the vehicle has to be braked is avoided. It is uneconomical from a fuel perspective to brake the vehicle, since kinetic energy is then wasted. If the vehicle has nevertheless to be braked, it is most effective to utilize an engine brake, that is to say to drag the engine. Engine braking by dragging of the engine consumes more fuel than coasting, and braking with a braking system converts kinetic energy into heat for the most part, so that none of these alternatives are desirable if the fuel consumption is to be minimized.

For the future speed profile $V_{sim}$ which is shown in figure 4, coasting would thus be deemed to be applicable, since the speed profile $V_{sim}$ is less than the highest permitted speed $v_{max}$ throughout the road section.

According to one embodiment of the present invention, a transmission mode for coasting comprises a state for the clutch 106. The evaluation of this transmission mode in this case comprises an evaluation of whether coasting by opening of the clutch 106 is deemed to be applicable. Hence coasting can thus be achieved by an open clutch if this is considered applicable. Opening the clutch 106 can also be seen as a fictitious/imaginary highest gear for the drive train. The choice of an open clutch can then be seen as selection of the gear which gives the lowest speed for the engine 101.

According to one embodiment of the invention, a transmission mode for coasting comprises a neutral gear position for the gearbox 103. The evaluation of this transmission mode in this case comprises an evaluation of whether coasting by a gearshift into this neutral gear position is deemed to be applicable. Hence coasting can thus be achieved by a neutral gear if this is considered applicable. Utilization of the neutral gear position can also be seen as a fictitious highest gear for the gearbox 103. The choice of neutral gear position can then be seen as selection of the gear which gives the lowest speed for the engine 101.

According to one embodiment, only one of the types of coasting is evaluated for a specific vehicle. For a specific vehicle, only one of open clutch and neutral gear position will then be evaluated.

By virtue of these embodiments, a very fuel-efficient driving of the vehicle can thus be achieved by utilization of an open clutch or neutral gear position if this is suitable for the road section ahead of the vehicle.

When coasting is to be evaluated, the at least one simulated future speed profile $v_{sim}$ comprises a simulated future speed profile $v_{sim\_coast}$ related to coasting, wherein the evaluation comprises a comparison of the simulated future speed profile $v_{sim\_coast}$ for coasting with the highest permitted speed $v_{max}$ in a manner such as has been described above. If the simulated future speed profile $v_{sim\_coast}$ for coasting is less than the highest permitted speed $v_{max}$ throughout the first time period $T_{12}$, as it is in the non-limiting example in figure 4, coasting is deemed an applicable transmission mode.

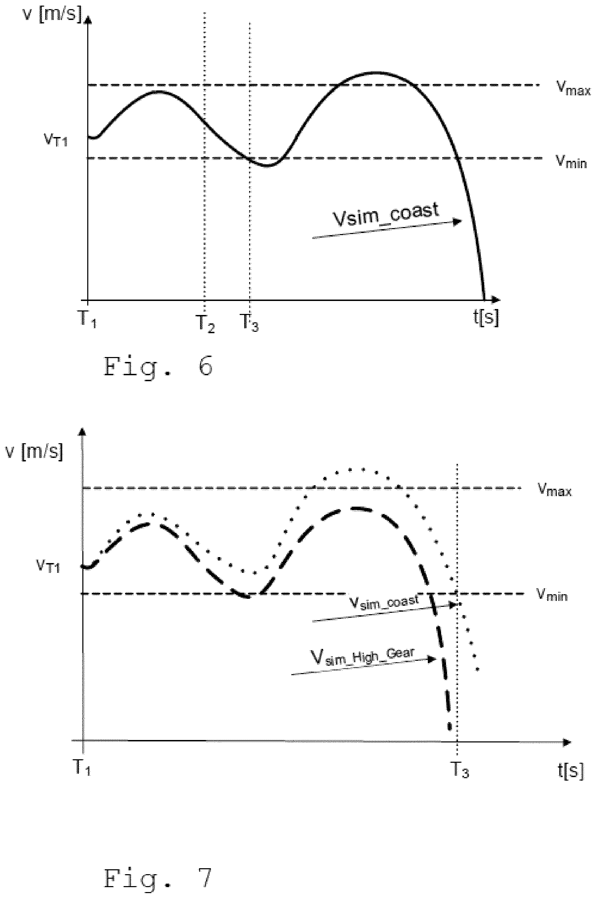

Figure 6 shows in schematic representation a non-limiting example of an embodiment of the present invention. The at least one simulated future speed profile $v_{sim}$ here comprises the simulated future speed profile $v_{sim\_coast}$ for coasting and the evaluation compares the simulated future speed profile $v_{sim\_coast}$ for coasting with the highest permitted speed $v_{max}$. According to the embodiment, coasting is deemed applicable if the simulated future speed profile $v_{sim\_coast}$ for coasting is less than the highest permitted speed $v_{max}$ throughout the second time period $T_{13}$. This second time period $T_{13}$ is longer than the first time period $T_{12}$ and extends from the first moment $T_1$ to a third moment $T_3$. The third moment $T_3$ is here related to the moment when the simulated speed profile $v_{sim\_coast}$ for coasting falls below the lowest permitted speed $v_{min}$, that is to say when the simulated speed profile $v_{sim\_coast}$ for coasting crosses the lowest permitted speed $v_{min}$. If the simulated future speed profile $v_{sim\_coast}$ for coasting does not cross the lowest permitted speed $v_{min}$ over the course of the road section, the third moment $T_3$ is set to a moment which corresponds to the end of the road section. In the example shown in figure 6, the transmission mode for coasting would thus be deemed applicable.

Figure 7 shows in schematic representation a non-limiting example of an embodiment of the present invention. Here the at least one simulated future speed profile $V_{sim}$ comprises a simulated future speed profile $v_{sim\_coast}$ related to coasting. The evaluation here comprises a comparison of a simulated future speed profile $v_{sim\_HighGear}$ related to a highest possible gear position for the gearbox 103 with the highest permitted speed $v_{max}$. The speed profile $v_{sim\_HighGear}$ for the highest possible gear position can here be related to essentially any one whatsoever of the higher gears in the gearbox 103, for example the highest gear of the gearbox.

The second time period $T_{13}$ is here defined as has been described above, i.e. as longer than the first time period $T_{12}$ and as running from the first moment $T_1$ to the third moment $T_3$ when the speed profile $v_{sim\_coast}$ for coasting falls below the lowest permitted speed $v_{min}$, alternatively when the road section ends if the speed profile $v_{sim\_coast}$ does not cross the lowest permitted speed $v_{min}$ over the course of the road section. According to the embodiment, the evaluation is based on the future speed profile $v_{sim\_HighGear}$ for the highest possible gear position by virtue of the fact that coasting is deemed applicable if the future speed profile $v_{sim\_HighGear}$ for the highest possible gear position is less than the highest permitted speed $v_{max}$ throughout the second time period $T_{13}$. If the future speed profile $v_{sim\_HighGear}$ for the highest possible gear position is less than the highest permitted speed $v_{max}$ throughout the second time period $T_{13}$, it means that there is scope for coasting at least for a time, which this embodiment exploits. The result is that the time for which coasting can be utilized is prolonged as much as possible, which is advantageous as it lowers the total fuel consumption of the vehicle. If the future speed profile $v_{sim\_HighGear}$ for the highest possible gear position exceeds the highest permitted speed $v_{max}$ in a later simulation, it is an indication that coasting can no longer be utilized.

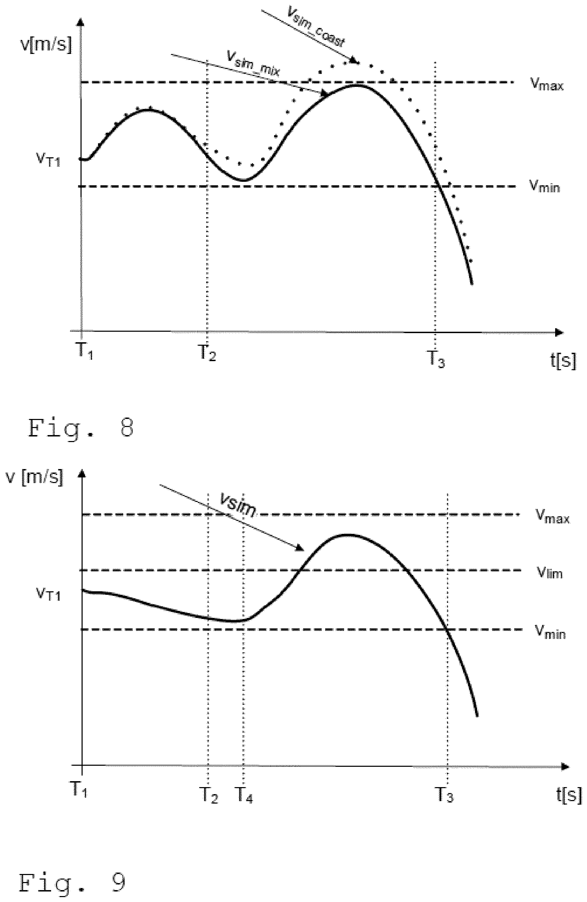

Figure 8 shows in schematic representation a non-limiting example of an embodiment of the present invention. Here, the at least one simulated future speed profile $v_{sim}$ comprises a simulated future combined speed profile $v_{sim\_mix}$, which is made up of a simulation related to coasting during the first time period $T_{12}$ and, thereafter, a simulation over the rest of the road section, which is related to a highest possible gear position.

According to the embodiment, the evaluation comprises a comparison of the simulated combined speed profile $v_{sim\_mix}$ with the highest permitted speed $v_{max}$, wherein coasting is deemed applicable if the simulated future combined speed profile $v_{sim\_mix}$ is less than the highest permitted speed $v_{max}$ throughout the second time period $T_{13}$, which is longer than the first time period $T_{12}$ and extends from the first moment $T_1$ to the third moment $T_3$. According to the embodiment, the third moment $T_3$ is when the simulated combined speed profile $v_{sim\_mix}$ falls below the lowest permitted speed $v_{min}$, or when the road section ends if the speed profile $v_{sim\_mix}$ does not cross the lowest permitted speed $v_{min}$ over the course of the road section. In the example shown in figure 8, coasting would thus be deemed to be applicable.

Through the use of the combined speed profile $v_{sim\_mix}$ in the evaluation, a better prediction of the coming course of events is obtained, since this combined speed profile $v_{sim\_mix}$ corresponds to a likely real appearance of the actual speed $v_{act}$ of the vehicle over the course of the road section. This corresponds to sequences of upshifts and/or downshifts which can be perceived as irritating for the driver. Moreover, the embodiment can be even more computing efficient than the embodiments which utilize two simulations, for example the above-stated embodiment which utilizes the simulated future speed profile $v_{sim\_HighGear}$ related to the highest possible gear position, since only one simulation is required here.

Figure 9 shows in schematic representation a non-limiting example of an embodiment of the present invention. According to this embodiment, a further lowest permitted speed $v_{lim}$, which is higher than, that is to say has a greater value than, the above-defined lowest permitted speed $v_{min}$, is introduced.

According to the embodiment, in the evaluation of the transmission mode, the at least one simulated future speed profile $v_{sim}$ is compared with this further lowest permitted speed $v_{lim}$. A transmission mode is here deemed applicable if a highest value $v_{sim\_max}$ for the speed profile $v_{sim}$ exceeds the further lowest permitted speed $v_{lim}$ at least once during a third time period $T_{43}$.

The third time period $T_{43}$ extends from a fourth moment $T_4$ to the third moment $T_3$, in which the speed profile $v_{sim}$ falls below the lowest permitted speed $v_{min}$ at the third moment $T_3$. The fourth moment $T_4$ has different values for different embodiments of the invention. According to one embodiment, the fourth moment $T_4$ corresponds to the first moment $T_1$, $T_4 = T_1$, wherein the third time period $T_{43}$ corresponds to the second time period $T_{13}$, $T_{43} = T_{13}$. According

to one embodiment, the fourth moment $T_4$ corresponds to a moment when the derivative for the speed profile $v_{sim}$, for the first time over the course of the road section, is positive, as is exemplified in figure 9. According to one embodiment, the fourth moment $T_4$ corresponds to a moment a predetermined time Tx after the first moment $T_1$, $T_4 = T_1 + T_X$.

The utilization of this further lowest permitted speed $v_{lim}$ in the evaluation imposes a further limitation on when coasting and/or a gear position are applicable, which gives an even more exact prediction of the coasting and/or the gear position. Moreover, a stricter demarcation of the third time period $T_{43}$ when the speed profile $v_{sim}$ shall exceed the further lowest permitted speed $v_{lim}$ increases the chances that the actual speed for the vehicle will be concluded with an overspeed, for example an overspeed relative to a set speed $v_{set}$ for a cruise control or an original actual vehicle speed.

According to various embodiments, the utilization of this further lowest permitted speed $v_{lim}$ in the evaluation can be applied in comparisons with all simulated future speed profiles $v_{sim}$ described in this document, such as for the simulated speed profile $v_{sim\_coast}$ for coasting, for the simulated speed profile $v_{sim-HighGear}$ for the highest possible gear position, and for the simulated future combined speed profile $v_{sim\_mix}$.

After the one or more different transmission modes have been evaluated for the road section, one of these shall be chosen for use in the vehicle. According to one embodiment of the invention, a transmission mode for coasting is in this case chosen if any one transmission mode for coasting has been deemed to be applicable. If no transmission mode for coasting has been deemed to be applicable, but one or more transmission modes for gear positions have been deemed to be applicable, a transmission mode for the highest of these applicable gear positions is chosen. As has been described above, the transmission modes for coasting can be seen as fictitious highest gear positions for the gearbox and/or the drive train, wherein the choice of transmission mode can be seen as a choice of the highest gear position which has been deemed applicable.

According to one embodiment of the invention, one of the ways of achieving coasting is analyzed for each vehicle. However, different ways of achieving coasting can be analyzed for different vehicles.

According to one embodiment, the magnitude of the lowest permitted speed $v_{min}$, that is to say the level of the lowest permitted speed $v_{min}$, is related to a current actual speed $v_{act}$ for the vehicle. According to one embodiment, the magnitude of the highest permitted speed $v_{max}$ is related to a downhill speed control velocity $v_{dhsc}$ for the vehicle.

The lowest permitted speed $v_{min}$ and/or the highest permitted speed $v_{max}$ can be altered dynamically and can have different values for different transmission modes.

According to one embodiment, the magnitude of the lowest permitted speed $v_{min}$ can be determined at least partially on the basis of information related to a cruise control system in said vehicle, for example on the basis of a set speed $v_{set}$, that is to say a driver-selected speed, for a cruise control system, or on the basis of a reference speed $v_{ref}$, which is utilized by said cruise control system to control a speed regulator. The determination of the lowest permitted speed $v_{min}$ can also be carried out by the cruise control system and made available to the system for the present invention.

According to one embodiment of the present invention, the system according to the present invention is integrated at least partially with cruise control logic of a cruise control system in the vehicle. The lowest permitted speed $v_{min}$ can then be controlled by the cruise control logic of the vehicle. For example, an intelligent cruise control lowers the vehicle speed in advance of descents, since the vehicle will anyway accelerate during the descent. According to this embodiment, the cruise control can also initiate a lowering of the lowest permitted speed $v_{min}$ and thereby prolong the time in coasting mode and/or in the highest possible gear for the vehicle. This lowering of the lowest permitted speed $v_{min}$ can be achieved, for example, if the lowest permitted speed $v_{min}$ is related to the reference speed $v_{ref}$, which is the target value which is lowered by the cruise control in the face of descents, wherein the regulation of the lowest permitted speed $v_{min}$ is obtained automatically. For example, the lowest permitted speed $v_{min}$ can constitute a percentage of the reference speed $v_{ref}$.

The speed limit values which are utilized by the present invention, that is to say the lowest permitted speed $v_{min}$, the highest permitted speed $v_{max}$ and the further lowest permitted speed $v_{lim}$, can generally be determined on the basis of a number of different methods. For example, these limit values can be fed in by the driver, constitute a percentage of an actual speed $v_{act}$ for the vehicle, constitute a percentage of a set speed $v_{set}$ for a cruise control system in the vehicle and/or be based on historical driving of the vehicle. The historical driving can be taken into account, for example, through the use of an adaptive algorithm which is updated during the progress of the vehicle.

As a non-limiting example it can be cited that the following values could be utilized for the speed limit values in this document:

- $v_{min}$ = 82 km/h or $v_{min}$ = 0.98 x $v_{set}$ km/h;

- $v_{max}$ = 90 km/h or $v_{max}$ = 1.06 x $v_{set}$ km/h, or $v_{max}$ = 0.995 x $v_{dhsc}$ km/h; and

- $v_{lim}$ = 85 km/h or $v_{min}$ = 1 x $v_{set}$ km/h.

As a non-limiting example it can be cited that the first time period $T_{12}$ could have the length $T_{12}$ = 10 seconds.

As has been described above, road slope can be determined on the basis of map data and positioning information. If such data are not available, the simulations can be based on estimates of the road slope encountered by the vehicle in the simulation instance. This places greater demands on the magnitude of the lowest permitted speed $v_{min}$, the highest permitted speed $v_{max}$, and/or the further lowest permitted speed $v_{lim}$, since the simulations are less exact and more divergent in magnitude. Moreover, according to one embodiment of the invention, the length of the horizon, that is to say the road section, can be shortened in order to counter these variations.

When the road slope for the road section is approximated with the road slope encountered by the vehicle in the simulation itself, an optimal result will be obtained in the case of a gentle descent. Gentle descents are ideal for coasting if the road slope, for example, is such that the simulated speed $v_{sim}$ lies within its permitted range, between the lowest permitted speed $v_{min}$ and the highest permitted speed $v_{max}$.

One advantage of simulating future speed profiles on the basis of current slope is that the same algorithm can be used both for roads and vehicles in which there is no access to future road slope and for roads and vehicles in which there is access to future road slope. Moreover, the simulation makes use of speed-dependent terms, such as, for example, air resistance and engine torque, so that a good estimate of how the vehicle will behave from this point forward is obtained even without knowledge of the future road slope.

According to one embodiment of the present invention, the control system of the transmission comprises a return to a lower gear position and/or return from coasting if one or more of the conditions are met from within the group:

- activation of a braking system in said vehicle;

- fall to below a threshold value for an air pressure in a braking system in said vehicle;

- depression, above a threshold value, of a gas pedal in said vehicle;

- exceeding of a threshold value for a requested engine torque in said vehicle;

- exceeding of a threshold valve for an actual vehicle speed;

- fall to below a threshold value for an actual vehicle speed;

- fall to below a threshold value for simulated remaining time till downshift;

- fall to below a threshold value for simulated remaining time till suspension of coasting;

- requesting of drag torque by a cruise control in said vehicle;

- engine failure for an engine in said vehicle;

- said lower gear position causes a highest permitted speed $v_{max}$ for the road section to be exceeded; and

- a time period $T_{appl}$ for which a current transmission mode is considered applicable is shorter than a threshold period $T_{lim}$.

The person skilled in the art will appreciate that a method for choosing a transmission mode according to the present invention can also be implemented in a computer program, which, when it is executed in a computer, instructs the computer to execute the method. The computer program is usually constituted by a computer program product 1003 stored on a digital storage medium, in which the computer program is incorporated in the computer-readable medium of the computer program product. Said computer-readable medium consists of a suitable memory, such as, for example: ROM (Read-Only Memory), PROM (Programmable Read-Only Memory), EPROM (Erasable PROM), Flash memory, EEPROM (Electrically Erasable PROM), a hard disk unit, etc.

Figure 10 shows in schematic representation a control unit 1000. The control unit 1000 comprises a computing unit 1001, which can be constituted by essentially any suitable type of processor or microcomputer, for example a circuit for digital signal processing (Digital Signal Processor, DSP), or a circuit having a predetermined specific function (Application Specific Integrated Circuit, ASIC). The computing unit 1001 is connected to a memory unit 1002 arranged in the control unit 1000, which memory unit provides the computing unit 1001 with, for example, the stored program code and/or the stored data which the computing unit 1001 requires to be able to perform computations. The computing unit 1001 is also arranged to store partial or final results of computations in the memory unit 1002.

In addition, the control unit 1000 is provided with devices 1011, 1012, 1013, 1014 for receiving and transmitting input and output signals. These input and output signals can contain waveforms, impulses, or other attributes which, by the devices 1011, 1013 for the reception of input signals, can be detected as information and can be converted into signals which can be processed by the computing unit 1001. These signals are then made available to the computing unit 1001. The devices 1012, 1014 for the transmission of output signals are arranged to convert signals received from the computing unit 1001 in order to create output signals by, for example, modulating the signals, which can be transmitted to other parts of and/or systems in the vehicle.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; or by a wireless connection. A person skilled in the art will appreciate that the above-stated computer can be constituted by the computing unit 1001 and that the above-stated memory can be constituted by the memory unit 1002.

Control systems in modern vehicles commonly consist of communication bus systems consisting of one or more communication buses for linking a number of electronic control units (ECU's), or controllers, and various components located on the vehicle. Such a control system can comprise a large number of control units and the responsibility for a specific function can be divided amongst more than one control unit. Vehicles of the shown type thus often comprise significantly more control units than are shown in figure 10, which is well known to the person skilled in the art within the technical field.

In the shown embodiment, the present invention is implemented in the control unit 1000. The invention can also, however, be implemented wholly or partially in one or more other control units already present in the vehicle, or in some control unit dedicated to the present invention.

According to one aspect of the invention, a system for choosing a transmission mode in a vehicle is provided, in which the system comprises a simulation unit, arranged to simulate at least one future speed profile $v_{sim}$ for an actual speed for the vehicle over the course of the road section. The simulation unit is designed to conduct simulation when the road section lies ahead of the vehicle and to base the simulation of each of the at least one future speed profiles $v_{sim}$ on a road slope and on a transmission mode for said vehicle.

The system also comprises an evaluation unit, which is arranged to evaluate an applicability of a transmission mode, wherein the transmission mode for each of the at least one simulated future speed profiles $v_{sim}$ is deemed applicable if each of the at least one simulated future speed profiles $v_{sim}$ is greater than the lowest permitted speed $v_{min}$ throughout the first time period $T_{12}$, which extends from a first moment $T_1$, when the at least one simulation is conducted, to a second, later moment $T_2$. The second moment $T_2$ constitutes a moment such that the first time period $T_{12}$ corresponds to a smallest permitted time period for which a transmission mode should be utilized after the simulation in order that inconsistent gearshift shall be avoided. The system also comprises a utilization unit, which is arranged to utilize the evaluation conducted by the evaluation unit in order to choose a transmission mode for the vehicle.

According to one embodiment of the invention, the transmission mode to be used by the vehicle is chosen by the control system.

According to another embodiment of the invention, which is directed toward providing the driver of the vehicle with information to support decision making when driving the vehicle, the utilization unit comprises a display unit. This display unit is arranged to present a transmission mode for coasting if coasting has been deemed to be applicable, and otherwise a transmission mode for the highest gear position which has been deemed to be applicable. The decision as to which transmission mode shall be used by the driver is thus taken here.

The display unit is preferably arranged integrated with, or adjacent to, a user interface in the vehicle, with the result that the display of a suitable transmission mode for use is clearly visible to the driver.

The display of the indicators can have a number of different designs. For example, the display is constituted by one or more of indicators for transmission modes, such as signs, numerals, letters, symbols, patterns, figures, colors, animations, and sound.

The system, that is to say the simulation unit, the evaluation unit, the utilization unit, and for certain embodiments the display unit, is designed to be able to realize all the above-described embodiments of the method according to the present invention.

The person skilled in the art will appreciate, of course, that speeds and speed limit values which have been quoted in this document have equivalences and can be translated into revolution speeds and revolution speed limit values or torque and torque limit values. Likewise, the person skilled in the art will appreciate that there is a very well-known correlation between distances, times and speeds, so that the herein quoted times and time periods have equivalences in positions and distances.

The person skilled in the art will also appreciate that the system above can be modified according to the different embodiments of the method according to the invention. The invention additionally relates to a motor vehicle 100, for example a truck or a bus, comprising at least one system for choosing a transmission mode according to the invention.

The present invention is not limited to the above-described embodiments of the invention but relates to and comprises all embodiments within the scope of the appended independent claims.

**Claims**

1. A method for choosing a transmission mode in a vehicle (100) over the course of a road section, wherein a lowest permitted speed $v_{min}$, which an actual speed for said vehicle (100) should exceed, is defined for said road section; the method comprising:

   - simulation of at least one future speed profile $v_{sim}$ for an actual speed for said vehicle (100) over the course of said road section, in which said simulation is conducted when said road section lies ahead of said vehicle (100) and in which said simulation of each of said at least one future speed profile $v_{sim}$ is based on a road slope and on a transmission mode for said vehicle;
   - evaluation of an applicability for a transmission mode, wherein said transmission mode for the respective said at least one future speed profile $v_{sim}$ is deemed applicable if the respective said at least one future speed profile $v_{sim}$ is greater than said lowest permitted speed $v_{min}$ throughout a first time period $T_{12}$, which extends from a first moment $T_1$, when said at least one simulation is conducted, to a second, later moment $T_2$, wherein said second moment $T_2$ constitutes a moment such that said first time period $T_{12}$ corresponds to a smallest permitted time period for which a transmission mode should be utilized after said simulation; and
   - utilization of said evaluation in said choice of a transmission mode,
   **characterized in that** a magnitude for said lowest permitted speed $v_{min}$ has different values for different transmission modes.

2. The method as claimed in patent claim 1, wherein

   - said evaluated transmission mode comprises coasting of said vehicle (100); and
   - said evaluation comprises a comparison of said at least one future speed profile $v_{sim}$ with a highest permitted speed $v_{max}$, below which an actual speed for said vehicle (100) should be kept.

3. The method as claimed in patent claim 2, wherein

   - said transmission mode for coasting comprises a state for a clutch (106) in said vehicle (100); and
   - said evaluation of said transmission mode comprises an evaluation of whether coasting by an opening of said clutch (106) is deemed to be applicable.

4. The method as claimed in patent claim 2, wherein

   - said transmission mode for coasting comprises a neutral gear position for a gearbox (103) in said vehicle (100); and
   - said evaluation of said transmission mode comprises an evaluation of whether coasting by a gearshift into said neutral gear position is deemed to be applicable.

5. The method as claimed in one of patent claims 2-4, wherein

   - said at least one future speed profile $v_{sim}$ comprises a simulated future speed profile $v_{sim\_coast}$ related to coasting;
   - said evaluation comprises a comparison of said future speed profile $v_{sim\_coast}$ related to coasting with said highest permitted speed $v_{max}$; and
   - coasting is deemed applicable if said future speed profile $v_{sim\_coast}$ related to coasting is less than said highest permitted speed $v_{max}$ throughout said first time period $T_{12}$.

6. The method as claimed in any one of patent claims 2-4, wherein

   - said at least one future speed profile $v_{sim}$ comprises a simulated future speed profile $v_{sim\_coast}$ related to coasting;
   - said evaluation comprises a comparison of said future speed profile $v_{sim\_coast}$ related to coasting with said highest permitted speed $v_{max}$; and
   - coasting is deemed applicable if said future speed profile $v_{sim\_coast}$ related to coasting is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future speed profile $v_{sim\_coast}$ related to coasting falls below said lowest permitted speed $v_{min}$

7. The method as claimed in any one of patent claims 2-4, wherein

- said at least one future speed profile $v_{sim}$ comprises a simulated future speed profile $v_{sim\_coast}$ related to coasting; and
- said evaluation comprises a comparison of a simulated future speed profile $v_{sim\_HighGear}$ related to a highest possible gear position for a gearbox (103) in said vehicle (100) with said highest permitted speed $v_{max}$; and
- coasting is deemed applicable if said future speed profile $v_{sim\_HighGear}$ related to a highest possible gear position is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future speed profile $v_{sim\_coast}$ related to coasting falls below said lowest permitted speed $v_{min}$.

8. The method as claimed in any one of patent claims 2-4, wherein

- said at least one future speed profile $v_{sim}$ comprises a simulated future combined speed profile $v_{sim\_mix}$; and
- said evaluation comprises a comparison of said future combined speed profile $v_{sim\_mix}$ with said highest permitted speed $v_{max}$, in which said future combined speed profile $v_{sim\_mix}$ is simulated on the basis of coasting during said first time period $T_{12}$ and thereafter is simulated on the basis of a highest possible gear position for a remnant of said road section; and
- coasting is deemed applicable if said future combined speed profile $v_{sim\_mix}$ is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future combined speed profile $v_{sim\_mix}$ falls below said lowest permitted speed $v_{min}$.

9. The method as claimed in any one of patent claims 7-8, wherein said third moment $T_3$ corresponds to an end of said road section if said future speed profile $v_{sim}$ is greater than said lowest permitted speed $v_{min}$ throughout the road section.

10. The method as claimed in any one of patent claims 2-9, wherein a magnitude for said highest permitted speed $v_{max}$ is related to a downhill speed control velocity $v_{dhsc}$ for said vehicle (100).

11. The method as claimed in any one of patent claims 2-10, wherein a magnitude for said highest permitted speed $v_{max}$ is altered dynamically.

12. The method as claimed in any one of patent claims 2-11, wherein a magnitude for said highest permitted speed $v_{max}$ has different values for different transmission modes.

13. A computer program comprising a program code, which, when said program code is executed in a computer, instructs said computer to execute the method as claimed in any one of patent claims 1-12.

14. A computer program product comprising a computer-readable medium and a computer program as claimed in patent claim 13, wherein said computer program is incorporated in said computer-readable medium.

**Patentansprüche**

1. Verfahren zum Auswählen eines Getriebemodus in einem Fahrzeug (100) über den Verlauf eines Streckenabschnitts, wobei eine niedrigste zulässige Geschwindigkeit $v_{min}$, welche eine tatsächliche Geschwindigkeit des Fahrzeugs (100) übersteigen soll, für den Streckenabschnitt festgelegt wird, wobei das Verfahren umfasst:

- Simulation wenigstens eines zukünftigen Geschwindigkeitsprofils $v_{sim}$ für eine tatsächliche Geschwindigkeit des Fahrzeugs (100) über den Verlauf des Streckenabschnitts, wobei die Simulation ausgeführt wird, wenn der Streckenabschnitt vor dem Fahrzeug (100) liegt und wobei die Simulation eines jeden des wenigstens einen zukünftigen Geschwindigkeitsprofils $v_{sim}$ auf einer Fahrbahnneigung und einem Getriebemodus für das Fahrzeug basiert,
- Evaluierung einer Anwendbarkeit eines Getriebemodus, wobei der Getriebemodus für das zugehörige wenigstens eine zukünftige Geschwindigkeitsprofil $v_{sim}$ als anwendbar erachtet wird, wenn das zugehörige wenigstens eine zukünftige Geschwindigkeitsprofil $v_{sim}$ größer ist als die niedrigste zulässige Geschwindigkeit $v_{min}$

während einer ersten Zeitdauer $T_{12}$, die von einem ersten Zeitpunkt $T_1$, an dem die wenigstens eine Simulation ausgeführt wird, bis zu einem zweiten, späteren Zeitpunkt $T_2$ reicht, wobei der zweite Zeitpunkt $T_2$ einen Zeitpunkt solchermaßen darstellt, dass die erste Zeitdauer $T_{12}$ einer kleinsten zulässigen Zeitdauer entspricht, für die ein Getriebemodus nach der Simulation verwendet werden soll, und

- Verwendung der Evaluation bei der Auswahl eines Getriebemodus,
**dadurch gekennzeichnet, dass** eine Größe für die niedrigste zulässige Geschwindigkeit $v_{min}$ für verschiedene Getriebemodi unterschiedliche Werte hat.

**2.** Verfahren nach Patentanspruch 1, bei dem

- der evaluierte Getriebemodus ein Segeln des Fahrzeugs (100) umfasst, und
- die Evaluation einen Vergleich des wenigstens einen zukünftigen Geschwindigkeitsprofils $v_{sim}$ mit einer höchsten zulässigen Geschwindigkeit $v_{max}$ umfasst, unterhalb derer eine tatsächliche Geschwindigkeit des Fahrzeugs (100) gehalten werden soll.

**3.** Verfahren nach Patentanspruch 2, bei dem

- der Getriebemodus für ein Segeln einen Zustand für eine Kupplung (106) in dem Fahrzeug (100) umfasst, und
- die Evaluation des Getriebemodus eine Evaluation dahingehend umfasst, ob ein Segeln durch ein Öffnen der Kupplung (106) als anwendbar erachtet wird.

**4.** Verfahren nach Patentanspruch 2, bei dem

- der Getriebemodus für ein Segeln eine Leerlaufstellung für ein Getriebe (103) in dem Fahrzeug (100) umfasst, und
- die Evaluation des Getriebemodus eine Evaluation dahingehend umfasst, ob ein Segeln durch einen Gangwechsel in die Leerlaufstellung als anwendbar erachtet wird.

**5.** Verfahren nach einem der Patentansprüche 2 bis 4, bei dem

- das wenigstens eine zukünftige Geschwindigkeitsprofil $v_{sim}$ ein simuliertes zukünftiges Geschwindigkeitsprofil $v_{sim\_coast}$ umfasst, welches ein Segeln betrifft,
- die Evaluation einen Vergleich des ein Segeln betreffenden zukünftigen Geschwindigkeitsprofils $v_{sim\_coast}$ mit der höchsten zulässigen Geschwindigkeit $v_{max}$ umfasst, und
- ein Segeln als anwendbar erachtet wird, wenn das ein Segeln betreffende zukünftige Geschwindigkeitsprofil $v_{sim\_coast}$ niedriger ist als die höchste zulässige Geschwindigkeit $v_{max}$ über die erste Zeitdauer $T_{12}$.

**6.** Verfahren nach einem der Patentansprüche 2 bis 4, bei dem

- das wenigstens eine zukünftige Geschwindigkeitsprofil $v_{sim}$ ein simuliertes zukünftiges Geschwindigkeitsprofil $v_{sim\_coast}$ umfasst, welches ein Segeln betrifft,
- die Evaluation einen Vergleich des ein Segeln betreffenden zukünftigen Geschwindigkeitsprofils $v_{sim\_coast}$ mit der höchsten zulässigen Geschwindigkeit $v_{max}$ umfasst, und
- ein Segeln als anwendbar erachtet wird, wenn das ein Segeln betreffende zukünftige Geschwindigkeitsprofil $v_{sim\_coast}$ niedriger ist als die höchste zulässige Geschwindigkeit $v_{max}$ über eine zweite Zeitdauer $T_{13}$, wobei die zweite Zeitdauer $T_{13}$ länger ist als die erste Zeitdauer $T_{12}$ und von dem ersten Zeitpunkt $T_1$ bis zu einem dritten Zeitpunkt $T_3$ reicht, an dem das ein Segeln betreffende zukünftige Geschwindigkeitsprofil $v_{sim\_coast}$ unter die niedrigste zulässige Geschwindigkeit $v_{min}$ fällt.

**7.** Verfahren nach einem der Patentansprüche 2 bis 4, bei dem

- das wenigstens eine zukünftige Geschwindigkeitsprofil $v_{sim}$ ein simuliertes zukünftiges Geschwindigkeitsprofil $v_{sim\_coast}$ umfasst, welches ein Segeln betrifft, und
- die Evaluation einen Vergleich eines simulierten zukünftigen Geschwindigkeitsprofils $v_{sim\_HighGear}$, welches eine höchstmögliche Gangstellung eines Getriebes (103) in dem Fahrzeug (100) betrifft, mit der höchsten zulässigen Geschwindigkeit $v_{max}$ umfasst, und
- ein Segeln als anwendbar erachtet wird, wenn das eine höchstmögliche Gangstellung betreffende zukünftige Geschwindigkeitsprofil $v_{sim\_HighGear}$ niedriger ist als die höchste zulässige Geschwindigkeit $v_{max}$ über eine

zweite Zeitdauer $T_{13}$, wobei die zweite Zeitdauer $T_{13}$ länger ist als die erste Zeitdauer $T_{12}$ und von dem ersten Zeitpunkt $T_1$ bis zu einem dritten Zeitpunkt $T_3$ reicht, an dem das ein Segeln betreffende zukünftige Geschwindigkeitsprofil $v_{sim\_coast}$ unter die niedrigste zulässige Geschwindigkeit $v_{min}$ fällt.

8. Verfahren nach einem der Patentansprüche 2 bis 4, bei dem

- das wenigstens eine zukünftige Geschwindigkeitsprofil $v_{sim}$ ein simuliertes zukünftiges kombiniertes Geschwindigkeitsprofil $v_{sim\_mix}$ umfasst, und
- die Evaluation einen Vergleich des zukünftigen kombinierten Geschwindigkeitsprofils $v_{sim\_mix}$ mit der höchsten zulässigen Geschwindigkeit $v_{max}$ umfasst, wobei das zukünftige kombinierte Geschwindigkeitsprofil $v_{sim\_mix}$ simuliert wird auf der Basis eines Segelns während der ersten Zeitdauer $T_{12}$ und danach simuliert wird auf der Basis einer höchstmöglichen Gangstellung für einen verbleibenden Teil des Streckenabschnitts, und
- ein Segeln als anwendbar erachtet wird, wenn das zukünftige kombinierte Geschwindigkeitsprofil $v_{sim\_mix}$ niedriger ist als die höchste zulässige Geschwindigkeit $v_{max}$ über eine zweite Zeitdauer $T_{13}$, wobei die zweite Zeitdauer $T_{13}$ länger ist als die erste Zeitdauer $T_{12}$ und von einem ersten Zeitpunkt $T_1$ bis zu einem dritten Zeitpunkt $T_3$ reicht, an dem das zukünftige kombinierte Geschwindigkeitsprofil $v_{sim\_mix}$ unter die niedrigste zulässige Geschwindigkeit $v_{min}$ fällt.

9. Verfahren nach einem der Patentansprüche 7 bis 8, bei dem der dritte Zeitpunkt $T_3$ einem Ende des Streckenabschnitts entspricht, falls das zukünftige Geschwindigkeitsprofil $v_{sim}$ durch den gesamten Streckenabschnitt höher ist als die niedrigste zulässige Geschwindigkeit $v_{min}$.

10. Verfahren nach einem der Patentansprüche 2 bis 9, bei dem ein Wert für die höchste zulässige Geschwindigkeit $v_{max}$ mit einer Bergabfahrgeschwindigkeitssteuergeschwindigkeit $v_{dhsc}$ für das Fahrzeug (100) zusammenhängt.

11. Verfahren nach einem der Patentansprüche 2 bis 10, bei dem ein Wert für die höchste zulässige Geschwindigkeit $v_{max}$ dynamisch geändert wird.

12. Verfahren nach einem der Patentansprüche 2 bis 11, bei dem ein Wert für die höchste zulässige Geschwindigkeit $v_{max}$ für unterschiedliche Getriebemodi unterschiedliche Werte hat.

13. Computerprogramm mit einem Programmcode, das, wenn der Programmcode in einem Computer ausgeführt wird, den Computer dazu instruiert, das Verfahren nach einem der Patentansprüche 1 bis 12 auszuführen.

14. Computerprogrammprodukt mit einem computerlesbaren Medium und einem Computerprogramm wie im Patentanspruch 13 beansprucht, wobei das Computerprogramm in dem computerlesbaren Medium inkorporiert ist.

**Revendications**

1. Procédé pour le choix d'un mode de transmission dans un véhicule (100) sur le parcours d'une section de route, dans lequel une vitesse la plus faible autorisée $v_{min}$, qu'une vitesse réelle pour ledit véhicule (100) doit dépasser, est définie pour ladite section de route ; le procédé comprenant :

- une simulation d'au moins un profil de vitesse future $v_{sim}$ pour une vitesse réelle pour ledit véhicule (100) sur le parcours de ladite section de route, dans laquelle ladite simulation est effectuée lorsque ladite section de route se trouve devant ledit véhicule (100) et dans laquelle ladite simulation de chacun desdits au moins un profil de vitesse future $v_{sim}$ est basée sur une pente de route et sur un mode de transmission pour ledit véhicule ;
- une évaluation d'une applicabilité pour un mode de transmission, dans lequel ledit mode de transmission pour ledit au moins un profil de vitesse future $v_{sim}$ respectif est jugé applicable si ledit au moins un profil de vitesse future $v_{sim}$ respectif est supérieur à ladite vitesse la plus faible autorisée $v_{min}$ tout au long d'une première période de temps $T_{12}$, qui s'étend à partir d'un premier moment $T_1$, lorsque ladite au moins une simulation est effectuée, jusqu'à un deuxième moment ultérieur $T_2$, dans lequel ledit deuxième moment $T_2$ constitue un moment tel que ladite première période de temps $T_{12}$ correspond à une plus petite période de temps autorisée pour laquelle un mode de transmission doit être utilisé après ladite simulation ; et
- une utilisation de ladite évaluation dans ledit choix d'un mode de transmission,
**caractérisé en ce qu'**une magnitude pour ladite vitesse la plus faible autorisée $v_{min}$ a des valeurs différentes pour différents modes de transmission.

**2.** Procédé selon la revendication 1, dans lequel

- ledit mode de transmission évalué comprend la marche en roue libre dudit véhicule (100) ; et
- ladite évaluation comprend une comparaison dudit au moins un profil de vitesse future $v_{sim}$ avec une vitesse la plus élevée autorisée $v_{max}$, en dessous de laquelle une vitesse réelle pour ledit véhicule (100) doit être maintenue.

**3.** Procédé selon la revendication 2, dans lequel

- ledit mode de transmission pour la marche en roue libre comprend un état pour un embrayage (106) dans ledit véhicule (100) ; et
- ladite évaluation dudit mode de transmission comprend le fait d'évaluer si la marche en roue libre par le désengagement dudit embrayage (106) est jugée applicable.

**4.** Procédé selon la revendication 2, dans lequel

- ledit mode de transmission pour la marche en roue libre comprend une position de point mort pour une boîte de vitesses (103) dans ledit véhicule (100) ; et
- ladite évaluation dudit mode de transmission comprend le fait d'évaluer si la marche en roue libre par un changement de vitesse dans ladite position de point mort est jugée applicable.

**5.** Procédé selon l'une des revendications 2 à 4, dans lequel

- ledit au moins un profil de vitesse future $v_{sim}$ comprend un profil de vitesse future simulé $v_{sim\_coast}$ lié à la marche en roue libre ;
- ladite évaluation comprend une comparaison dudit profil de vitesse future $v_{sim\_coast}$ lié à la marche en roue libre avec ladite vitesse la plus élevée autorisée $v_{max}$ ; et
- la marche en roue libre est jugée applicable si ledit profil de vitesse future $v_{sim\_coast}$ lié à la marche en roue libre est inférieur à ladite vitesse la plus élevée autorisée $v_{max}$ tout au long de ladite première période $T_{12}$.

**6.** Procédé selon l'une quelconque des revendications 2 à 4, dans lequel

- ledit au moins un profil de vitesse future $v_{sim}$ comprend un profil de vitesse future simulé $v_{sim\_coast}$ lié à la marche en roue libre ;
- ladite évaluation comprend une comparaison dudit profil de vitesse future $v_{sim\_coast}$ lié à la marche en roue libre avec ladite vitesse la plus élevée autorisée $v_{max}$ ; et
- la marche en roue libre est jugée applicable si ledit profil de vitesse future $v_{sim\_coast}$ lié à la marche en roue libre est inférieur à ladite vitesse la plus élevée autorisée $v_{max}$ tout au long d'une deuxième période de temps $T_{13}$, dans laquelle ladite deuxième période de temps $T_{13}$ est plus longue que ladite première période de temps $T_{12}$ et s'étend à partir du premier moment $T_1$ jusqu'à un troisième moment $T_3$, lorsque ledit profil de vitesse future $v_{sim\_coast}$ lié à la marche en roue libre tombe sous ladite vitesse la plus faible autorisée $v_{min}$.

**7.** Procédé selon l'une quelconque des revendications 2 à 4, dans lequel

- ledit au moins un profil de vitesse future $v_{sim}$ comprend un profil de vitesse future simulée $v_{sim\_coast}$ lié à la marche en roue libre ; et
- ladite évaluation comprend une comparaison d'un profil de vitesse future simulé $v_{sim\_HighGear}$ lié à une position de vitesse la plus élevée possible pour une boîte de vitesses (103) dans ledit véhicule (100) avec ladite vitesse la plus élevée autorisée $v_{max}$ ; et
- la marche en roue libre est jugée applicable si ledit profil de vitesse future $v_{sim\_HighGear}$ lié à une position de vitesse la plus élevée possible est inférieur à ladite vitesse la plus élevée autorisée $v_{max}$ tout au long d'une deuxième période de temps $T_{13}$, dans laquelle ladite deuxième période de temps $T_{13}$ est plus longue que ladite première période de temps $T_{12}$ et s'étend à partir dudit premier moment $T_1$ jusqu'à un troisième moment $T_3$, lorsque ledit profil de vitesse future $v_{sim\_coast}$ lié à la marche en roue libre tombe sous ladite vitesse la plus faible autorisée $v_{min}$.

**8.** Procédé selon l'une quelconque des revendications 2 à 4, dans lequel

- ledit au moins un profil de vitesse future $v_{sim}$ comprend un profil de vitesse combinée future simulé $v_{sim\_mix}$ ; et
- ladite évaluation comprend une comparaison dudit profil de vitesse combinée future $v_{sim\_mix}$ avec ladite vitesse la plus élevée autorisée $v_{max}$, dans laquelle ledit profil de vitesse combinée future $v_{sim\_mix}$ est simulé sur la base de la marche en roue libre durant ladite première période de temps $T_{12}$ et est ensuite simulé sur la base d'une position de vitesse la plus élevée possible pour un reste de ladite section de route ; et
- la marche en roue libre est jugée applicable si ledit profil de vitesse combinée future $v_{sim\_mix}$ est inférieur à ladite vitesse la plus élevée autorisée $v_{max}$ tout au long d'une deuxième période de temps $T_{13}$, dans laquelle ladite deuxième période de temps $T_{13}$ est plus longue que ladite première période de temps $T_{12}$ et s'étend à partir dudit premier moment $T_1$ jusqu'à un troisième moment $T_3$ lorsque ledit profil de vitesse combinée future $v_{sim\_mix}$ tombe sous ladite vitesse la plus faible autorisée $v_{min}$.

9. Procédé selon l'une quelconque des revendications 7 à 8, dans lequel ledit troisième moment $T_3$ correspond à une fin de ladite section de route si ledit profil de vitesse future $v_{sim}$ est supérieur à ladite vitesse la plus faible autorisée $v_{min}$ tout au long de la section de route.

10. Procédé selon l'une quelconque des revendications 2 à 8, dans lequel une magnitude pour ladite vitesse la plus élevée autorisée $v_{max}$ est liée à une vitesse de commande de vitesse de descente $v_{dhsc}$ pour ledit véhicule (100).

11. Procédé selon l'une quelconque des revendications 2 à 9, dans lequel une magnitude pour ladite vitesse la plus élevée autorisée $v_{max}$ est modifiée dynamiquement.

12. Procédé selon l'une quelconque des revendications 2 à 11, dans lequel une magnitude pour ladite vitesse la plus élevée autorisée $v_{max}$ a des valeurs différentes pour différents modes de transmission.

13. Programme informatique comprenant un code de programme qui, lorsque ledit code de programme est exécuté dans un ordinateur, donne l'instruction audit ordinateur d'exécuter le procédé selon l'une quelconque des revendications 1 à 12.

14. Produit de programme informatique comprenant un support lisible par ordinateur et un programme informatique selon la revendication 13, dans lequel ledit programme informatique est incorporé dans ledit support lisible par ordinateur.

FIG. 1

$$\tfrac{1}{2}mv_2{}^2$$

$$m \cdot g \cdot h$$

$$\tfrac{1}{2}mv_1{}^2$$

FIG. 2

Engine friction (drag torque)

FIG. 3

FIG. 4

[501]

Simulation of $v_{sim}$ on the basis of a road slope and on a transmission mode

[502]

Evaluation of applicability for a transmission mode on the basis of $v_{sim}$ and $v_{min}$ throughout $T_{12}$

[503]

Choice of a transmission mode on the basis of the evaluation

Fig. 5

Fig. 6

Fig. 7

Fig. 8

Fig. 9

Fig. 10

**REFERENCES CITED IN THE DESCRIPTION**

**Patent documents cited in the description**

- DE 102010030346